# EUROPÄISCHE PATENTSCHRIFT

(11) **EP 0 454 943 B1**
(45) Veröffentlichungstag und Bekanntmachung des Hinweises auf die Patenterteilung: **02.03.1994**
(21) Anmeldenummer: 91100668.2
(22) Anmeldetag: 21.01.1991
(51) Int. Cl.: F02B 37/12, F01N 3/20

(54) **Turbolader an einer Brennkraftmaschine**
Turbocharger for an internal combustion engine
Turbo-compresseur pour un moteur à combustion interne

(30) Priorität: 04.05.1990 DE 4014398
(43) Veröffentlichungstag der Anmeldung: 06.11.1991
(73) Patentinhaber: Dr.Ing.h.c. F. Porsche Aktiengesellschaft, 70435 Stuttgart (DE)
(72) Erfinder: Bruestle, Claus, W-7258 Heimsheim (DE); Kaiser, Friedrich-Wilhelm, W-7251 Weissach (DE)

(56) Entgegenhaltungen:
- EP-A- 0 227 475
- DE-A- 3 306 484
- DE-A- 3 506 303
- DE-C- 3 540 013

## Beschreibung

Die Erfindung betrifft einen Turbolader gemäß dem Oberbegriff des Hauptanspruches.

Aus der DE 35 06 303 ist eine Brennkraftmaschine mit einem Turbolader und einem stromab dazu in der Abgasleitung angeordneten Katalysator bekannt. Zur Beeinflussung der Strömungsverhältnisse in der Turbine des Turboladers ist als Turbinenleitapparat ein von einem Stellglied betätigbares Drosselventil in dem zwischen der Brennkraftmaschine und der Turbine liegenden Teil der Abgasleitung angeordnet.

Die DE 35 40 013 zeigt eine Vorrichtung und ein Verfahren zum Beeinflußen der Zeit bis zum Erreichen der Anspringtemperatur eines Katalysators an einer Brennkraftmaschine, bei der stromab des Katalysators eine Drosseleinrichtung angeordnet ist, die in der Warmlaufphase den Querschnitt der Abgasleitung verringert. Durch den dabei erhöhten Abgasgegendruck wird, um einen Drehzahlabfall zu verhindern, der Gemischmassenstrom erhöht, so daß ein vergrößertes Energieangebot den Katalysator schneller auf seine Anspringtemperatur erwärmt.

In der DE 39 41 715 ist ein Abgasturbolader an einer Brennkraftmaschine offenbart, welcher als Turbinenleitapparat mehrere, auf einem Umfang angeordneten Leitschaufeln aufweist. Dabei werden über ein Stellglied die Leitschaufeln der Turbine zur Ladedrucksteuerung geschwenkt.

Aufgabe der vorliegenden Erfindung ist es, einen gattungsgemäßen Turbolader für eine Brennkraftmaschine zu schaffen, der ein schnelles Erwärmen des Katalysators nach dem Kaltstart der Brennkraftmaschine gewährleistet.

Die Lösung dieser Aufgabe gelingt mit den Merkmalen des Patentanspruches 1. Weitere, die Erfindung vorteilhaft gestaltende Merkmale sind in den Unteransprüchen benannt.

Der als variable Turbinengeometrie (VTG) wirkende Turbinenleitapparat des Turboladers verringert nach dem Kaltstart der Brennkraftmaschine den Querschnitt der Abgasleitung und erhöht somit den Abgasgegendruck.

Vorteilhafterweise gewährleistet die Verwendung der üblicherweise zur Ladedruckregelung des Turboladers benutzten VTG ein schnelleres Erwärmen des Katalysators. Die in der Kaltstartphase erhöhte Schadstoffemission der Brennkraftmaschine wird durch das schnelle Erreichen der Arbeitstemperatur des Katalysators deutlich vermindert.

Es ist kein weiteres Stellglied zur Betätigung der VTG notwendig, da das für die Ladedruckregelung mit einem Überdruck beaufschlagte Stellglied für die Verringerung des Querschnittes der Abgasleitung mit einem Unterdruck beaufschlagt wird.
Eine Nachrüstung an vorhandenen, mit einer VTG ausgerüsteten Brennkraftmaschinen, ist in einfacher Weise möglich. Das vorhandene Steuergerät wird in seinen Funktionen erweitert und steuert zusätzlich ein weiteres Ventil an, welches die VTG für die Erhöhung des Abgasgegendruckes verstellt.

Ein Ausführungsbeispiel der Erfindung wird anhand von Figuren nachfolgend erläutert.

Es zeigt:

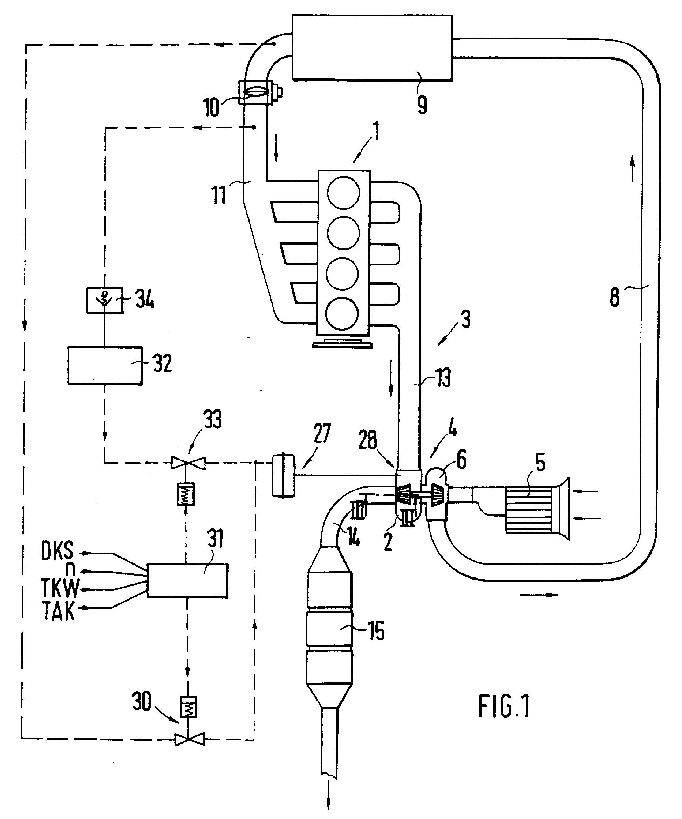

- Fig.1: einen schematischen Turbolader an einer Brennkraftmaschine,
- Fig.2: schematisch ein Last/Drehzahl-Motorkennfeld einer Brennkraftmaschine,
- Fig.3: einen Schnitt durch eine Turbine entlang der Linie III-III gemäß Fig.1,
- Fig.4: einen Schnitt entlang der Linie IV-IV gemäß Fig.3 und
- Fig.5a - 5d: die Zustände an verschiedenen Komponenten in ihrem zeitlichen Ablauf

Eine in einem nicht näher gezeigten Kraftfahrzeug eingebaute Brennkraftmaschine 1 wird über einen Verdichter 2 eines in einer Abgasleitung 3 eingesetzten Turboladers 4 mit Frischluft versorgt. Diese Luft durchströmt zunächst einen Luftfilter 5, bevor sie den mit einer Turbine 6 auf einer gemeinsamen Achse 7 angeordneten Verdichter 2 erreicht. Von dort wird die Luft durch eine Leitung 8 einem Ladeluftkühler 9, anschließend einer Drosselklappe 10 und von dort einem Ansaugrohr 11 zugeführt.
Die Abgase der Brennkraftmaschine werden der Turbine 6 über einen ersten Abschnitt 13 der Abgasleitung 3 zugeführt, bevor sie einen in einem zweiten Abschnitt 14 eingesetzten Katalysator 15 zur Reinigung durchströmen.

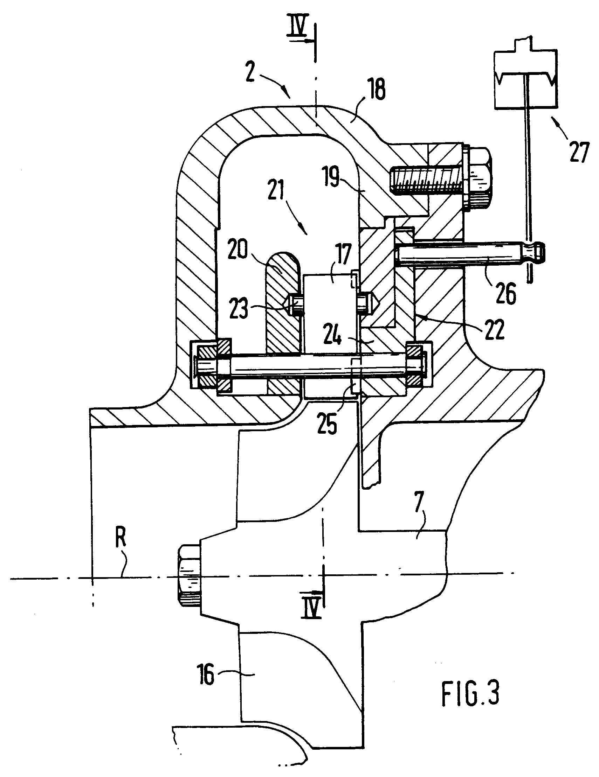

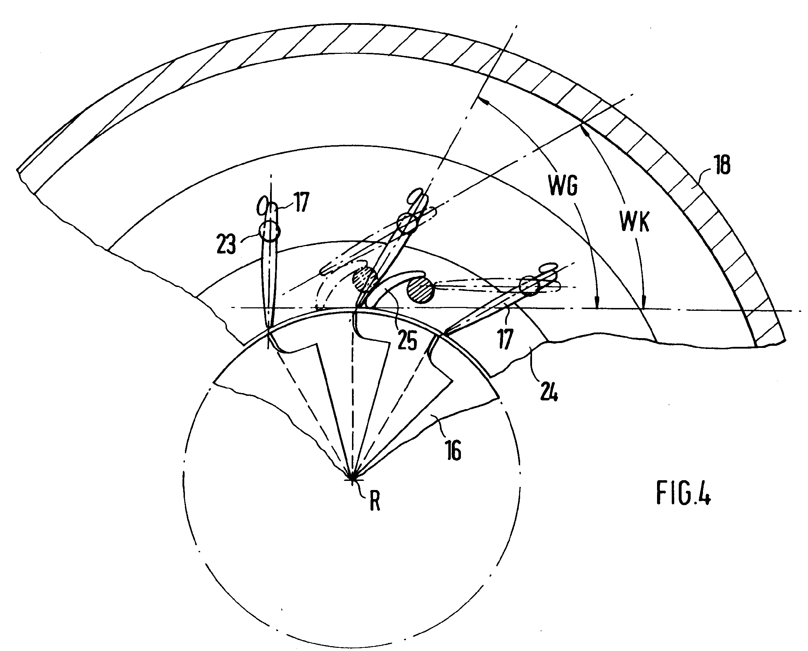

Die Turbine 6 ist gemäß der Fig. 3 und 4 mit einem verstellbaren Turbinenleitapparat versehen und weist dafür in ihrem Anstellwinkel gegenüber dem Turbinenrad 16 verstellbare Leitschaufeln 17, also eine Ausführungsform einer variablen Turbinengeometrie, auch VTG genannt, auf. Diese ist gemäß der bereits genannten DE 39 41 715 aufgebaut und wird hier nur soweit erforderlich erläutert. Das Turbinenrad 16 ist in einem Turbinengehäuse 18 gelagert, in dem zwischen einer Gehäusewand 19 und einer Trennwand 20 ein Einlaßkanal 21 für Abgase ausgebildet ist. Die Leitschaufeln 17 werden mit einem Verstellmechanismus 22 zwischen einem kleinsten Anstellwinkel WK und einem größten Anstellwinkel WG um eine Lagerachse 23 verschwenkt. Dabei werden die Leitschaufeln 17 über an einem um die Rotationsachse R der Achse 7 drehbaren Verstellring 24 angeordnete Mitnehmer 25 bewegt. Der Verstellring 24 wird mit Hilfe eines an ihm befestigten Stiftes 26 und einem daran angreifenden, pneumatischen Stellglied 27 verdreht.

Das Stellglied 27 wird im betriebswarmen Zustand der Brennkraftmaschine 1 zur Ladedruckregelung benutzt und dabei zur Verstellung der VTG mit einem zweiten Druck beaufschlagt. Dieser wird als Überdruck PÜ zwischen Ladeluftkühler 9 und Drosselklappe 10 abgegriffen und wirkt über eine geöffnete, zweite Ventileinrichtung auf das Steuerglied 27. Diese zweite Ventileinrichtung wird durch ein Taktventil 30 gebildet. Die Ansteuerung dieses Ventiles erfolgt über einen Ausgang eines Steuergerätes 31, welches die Eingangssignale Drosselklappenstellung DKS, Brennkraftmaschinendrehzahl n, Kühlwassertemperatur TKW und die Abgastemperatur TAK stromauf des Katalysators 15 verarbeitet.

Für den erfindungsgemäßen Turbolader ist zusätzlich zwischen Ansaugrohr 11 und Stellglied 27 ein Unterdruckreservoir 32 und ein als erste Ventileinrichtung wirkendes Schaltventil 33 parallel zu dem Taktventil 30 angeordnet, welches über einen weiteren Ausgang des Steuergerätes 31 angesteuert wird.

Das Unterdruckreservoir 32 wird mit einem ersten, als Unterdruck PU zwischen Drosselklappe 10 und Brennkraftmaschine 1 abgegriffenen Druck über ein Rückschlagventil 34 beaufschlagt.

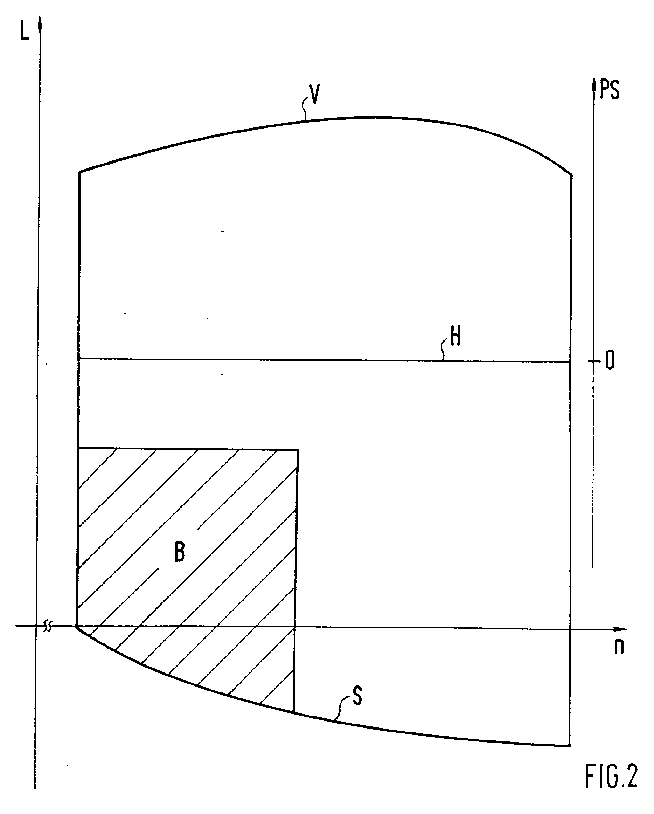

Das in Fig.2 gezeigte schematische Last/Drehzahl-Motorkennfeld ist in dem Steuergerät 31 abgespeichert. In diesem Kennfeld ist die Last L über der Drehzahl n aufgetragen, wobei die obere Begrenzung durch die Vollastlinie V und die untere durch die Linie S im Schubbetrieb der Brennkraftmaschine 1 gegeben ist. Die horizontal verlaufende Linie H kennzeichnet den Übergang des Druckes PS im Ansaugrohr 11 von einem reinen Saugbetrieb der Brennkraftmaschine zu dem aufgeladenen Betrieb.
Der schraffiert dargestellte Bereich B kennzeichnet den Betrieb der Brennkraftmaschine 1 nach einem Kaltstart, d.h., Kühlwassertemperatur TKW, Abgastemperatur TAK und Druck PS haben niedrige Werte. Die Ladedruckregelung mit Hilfe der VTG erfolgt ausschließlich außerhalb dieses Bereiches B. In diesem Bereich B schließt das Steuergerät 31 das Taktventil 30 und öffnet, d.h. aktiviert das Schaltventil 33, so daß das Stellglied 27 mit dem Unterdruck PU aus dem Unterdruckreservoir 32 beaufschlagt wird und verstellt die Leitschaufeln 17 auf den kleinsten Anstellwinkel WK. Der Querschnitt der Abgasleitung 3 wird somit verringert. Dabei wird ein Drehzahlabfall der Brennkraftmaschine 1 durch eine Vergrößerung des Gemischmassenstromes verhindert, wodurch die freiwerdende Energie den Katalysator 15 schnell auf seine Anspringtemperatur erwärmt.
Ist diese Anspringtemperatur erreicht, verschließt das Steuergerät 31 das Schaltventil 33 und öffnet das Taktventil 30, so daß die VTG zur Ladedruckregelung benutzt werden kann. Das Erreichen der Anspringtemperatur kann direkt über die Messung der Abgastemperatur TAK erfaßt werden oder es wird indirekt nach dem Ablauf einer festgelegten Zeitspanne angenommen.
Bei ausgeschalteter Brennkraftmaschine stehen die Leitschaufeln 17 in einer definierten Stellung zwischen dem Winkel WK und dem Winkel WG. Der Überdruck PÜ verstellt sie außerhalb des Bereiches B in Richtung Winkel WG, der Unterdruck PU innerhalb des Bereiches B in Richtung Winkel WK.

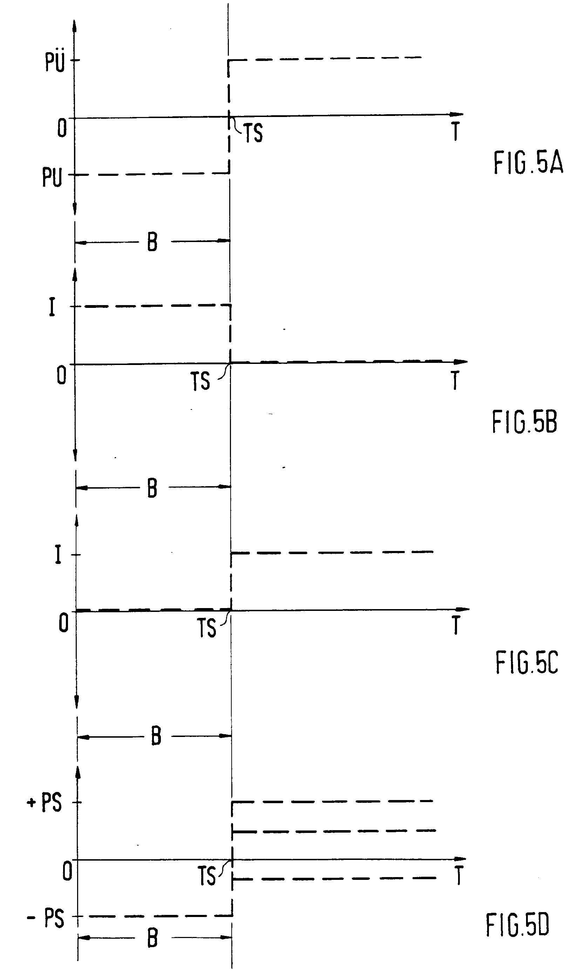

In den Figuren 5a bis 5d sind schematisch die Zustände verschiedener Komponenten der Erfindung in ihrem zeitlichen Ablauf dargestellt. Entlang der Zeitachse T entspricht der Abschnitt von T = 0 bis zu einer Schaltzeit TS dem Bereich B in Fig.2. Ab T = TS sind Zustände für den restlichen Bereich des Kennfeldes aufgetragen. Fig.5a zeigt im Bereich B den an dem Stellglied 27 anliegenden Unterdruck PU, darüber hinaus den zur Ladedruckregelung der VTG nötigen Überdruck PÜ. Fig.5b zeigt den aktivierten, geöffneten Zustand I des Schaltventiles 33 nur im Bereich B, während Fig. 5c die umgekehrten Zustände am Taktventil 30 zeigt. In Fig. 5d ist der Verlauf des Saugrohrdruckes PS von einem Unterdruck -PS im Bereich B zu einem Druck zwischen -PS und +PS außerhalb des Bereiches B gezeigt. Dieser Druck ist vom Lastanstieg beim Verlassen des Bereiches B abhängig.

## Patentansprüche

1. Turbolader (4) an einer Brennkraftmaschine (1) mit einem zur Beeinflussung der Strömungsverhältnisse in der Turbine (6) angeordneten, von einem pneumatischen Stellglied (27) betätigbaren Turbinenleitapparat,
und mit einem in einer Abgasleitung (3) stromab des Turboladers (4) angeordneten Katalysator (15), **dadurch gekennzeichnet,** daß bei Betrieb der Brennkraftmaschine (1) in einem Teilbereich (B) eines Last/Drehzahl-Motorkennfeldes
unmittelbar nach dem Start der Brennkraftmaschine (1) der Querschnitt der Abgasleitung (3) durch den Turbinenleitapparat verringert ist und nach Erreichen der Anspringtemperatur des Katalysators (15) diese Verringerung aufgehoben ist,
und daß zur Betätigung des Turbinenleitapparates das Stellglied (27) an einen ersten Druck (Unterdruck PU) über eine erste, nur im Teilbereich (B) aktivierte Ventileinrichtung (Schaltventil 33) und an einen zweiten Druck (Überdruck PÜ) über eine außerhalb des Teilbereiches (B) aktivierte, zweite Ventileinrichtung (Taktventil 30) angeschlossen ist.

2. Turbolader nach Anspruch 1, **dadurch gekennzeichnet**, daß die erste Ventileinrichtung ein Schaltventil (33) ist und der erste Druck (Unterdruck PU) zwischen einer Drosselklappe (10) und der Brennkraftmaschine (1) vorliegt, und daß die zweite Ventileinrichtung ein Taktventil (30) ist und der zweite Druck (Überdruck PÜ) zwischen der Turbine (6) und der Drosselklappe (10) vorliegt.

3. Turbolader nach Anspruch 1, **dadurch gekennzeichnet,** daß das Last/Drehzahl-Motorkennfeld in einem elektronischen Steuergerät (31) gespeichert ist, welches in Abhängigkeit mehrerer Eingangssignale (Kühlwassertemperatur TKW, Abgastemperatur TAK, Drosselklappenstellung DKS, Brennkraftmaschinen-Drehzahl n) wechselweise die Ventileinrichtungen (Schaltventil 33, Taktventil 30) aktiviert.

## Claims

1. A turbocharger (4) on an internal-combustion engine (1), having a turbine distributor actuable by a pneumatic control member (27) and arranged for controlling the flow ratios in the turbine (6), and having a catalyst (15) arranged in an exhaust-gas pipe (3) downstream of the turbocharger (4), **characterized in that** during the operation of the internal-combustion engine (1) in a partial range (B) of a load/speed engine characteristic graph immediately after the internal-combustion engine (1) is started the cross-section of the exhaust-gas pipe (3) is reduced by the turbine distributor and after the starting temperature of the catalyst (15) has been reached this reduction is discontinued, and in order to actuate the turbine distributor the control member (27) is connected to a first pressure (reduced pressure PU) by way of a first valve device (on/off valve 33) actuated only in the partial range (B) and to a second pressure (excess pressure PÜ) by way of a second valve device (time valve 30) actuated outside the partial range (B).

2. A turbocharger according to Claim 1, **characterized in that** the first valve device is an on/off valve (33) and the first pressure (reduced pressure PU) is present between a throttle valve (10) and the internal-combustion engine (1), and the second valve device is a time valve (30) and the second pressure (excess pressure PÜ) is present between the turbine (6) and the throttle valve (10).

3. A turbocharger according to Claim 1, **characterized in that** the load/speed engine characteristic graph is stored in an electronic control device (31), actuating the valve devices (on/off valve 33, time valve 30) alternately as a function of a plurality of input signals (cooling-water temperature TKW, exhaust-gas temperature TAK, throttle-valve setting DKS, internal-combustion engine speed **n**).

## Revendications

1. Turbocompresseur (4) d'un moteur à combustion (1) comportant un appareil de guidage de turbine monté dans la turbine (6), actionné par un organe de réglage (27) pneumatique, pour influencer les conditions d'écoulement, et comportant un catalyseur (15), monté dans une tuyauterie des gaz d'échappement (3) en aval du turbocompresseur (4), caractérisé en ce que lorsque le moteur à combustion (1) fonctionne dans une plage partielle (B) d'un champ caractéristique charge/vitesse de rotation du moteur, immédiatement après le démarrage du moteur à combustion (1) la section transversale de la tuyauterie des gaz d'échappement (3) est réduite par l'appareil de guidage de turbine et après que la température d'intervention du catalyseur (15) cette réduction est supprimée et en ce que pour actionner l'appareil de guidage de turbine l'organe de réglage (27) est raccordé à une première pression (dépression PU) par un premier dispositif à soupape (soupape de commutation 33) activé uniquement dans la plage partielle (B) et à une seconde pression (surpression PÜ) par un second dispositif à soupape (soupape de synchronisation 30), activé à l'extérieur de la plage partielle (B).

2. Turbocompresseur selon la revendication 1, caractérisé en ce que le premier dispositif à soupape est une soupape de commutation (33) et la première pression (dépression PU) existe entre un papillon des gaz (10) et le moteur à combustion (1) et en ce que le deuxième dispositif à soupape est une soupape de synchronisation (30) et la seconde pression (surpression PÜ) existe entre la turbine (6) et le papillon des gaz (10).

3. Turbocompresseur selon la revendication 1, caractérisé en ce que le champ caractéristique charge/vitesse de rotation du moteur est mémorisé dans un appareil de commande (31) électronique qui active alternativement les dispositifs à soupape (soupape de commutation 33, soupape de synchronisation 30) en fonction de plusieurs signaux d'entrée (température de l'eau de refroidissement TKW, température des gaz d'échappement TAK, position du papillon des gaz DKS, vitesse de rotation n du moteur à combustion).
